# DEMANDE DE BREVET EUROPEEN

(11) **EP 0 722 876 A1**
(43) Date de publication de la demande: **24.07.1996**
(21) Numéro de dépôt: 96400080.6
(22) Date de dépôt: 12.01.1996
(51) Int. Cl.: B61L 25/08, G06F 11/16

(54) **Méthode pour sécuriser l'affichage, sur un écran, de synoptiques reflétant l'état d'un système**

(30) Priorité: 17.01.1995 FR 9500453
(71) Demandeur: ALCATEL ALSTHOM COMPAGNIE GENERALE D'ELECTRICITE, F-75008 Paris (FR)
(72) Inventeur: Simon, François, F-91290 Arpajon (FR)
(74) Mandataire: Prugneau, Philippe

(57) **Abrégé**

L'invention concerne une méthode pour sécuriser l'affichage, sur un écran (21) d'une station de travail (2), de synoptiques reflétant l'état d'un système (1) connecté à la station de travail. Selon cette méthode, on maintient un premier compteur (C) au sein du système et un second compteur (C-ST) au sein de la station de travail. Périodiquement, le système transmet à la station de travail des données d'image (D) définissant un synoptique reflétant l'état courant du système, le premier compteur et une signature (U). En réponse, la station de travail affiche à l'écran un synoptique à partir des données d'image reçues et calcule une valeur de test fonction du premier et du second compteur notamment, cette valeur servant de base à la détection d'une erreur d'affichage.

## Description

L'invention concerne un affichage sécurisé sur un écran d'une station de travail. L'invention s'applique en particulier aux systèmes d'enclenchements ferroviaires.

Un système d'enclenchements ferroviaires sert à commander les équipements de voie d'un réseau ferroviaire en fonction de requêtes d'exploitation passées par un opérateur depuis un poste central.

Pour gérer un tel système d'enclenchements ferroviaires, on lui adjoint généralement un système de supervision équipé d'une station de travail munie d'un écran pour visualiser sous forme de synoptiques l'état courant du réseau ferroviaire. Ces synoptiques sont élaborés à partir d'informations remontées depuis des capteurs situés sur le réseau ferroviaire sous surveillance. Au vu de la situation qui apparaît sur l'écran, un opérateur contrôle le bon fonctionnement du système d'enclenchements ferroviaires. Mais surtout, l'opérateur peut prendre autoritairement des décisions concernant la commande des équipements de voie du réseau ferroviaire, notamment en cas de dysfonctionnement de certains d'entre eux de façon à garantir la bonne exploitation du réseau. A cet égard, sécuriser l'affichage s'entend comme détecter un dysfonctionnement de l'affichage.

Dans ce genre de situations, il est important, pour ce type d'opérations très critiques du point de vue de la sécurité, de s'assurer que l'affichage des synoptiques sur l'écran reflète exactement l'état courant du réseau ferroviaire. En particulier, il convient de s'assurer que le système de supervision fonctionne correctement. Dans le cas contraire, il est important que l'opérateur puisse détecter un dysfonctionnement de celui-ci, notamment une erreur au niveau de l'affichage des synoptiques. Une erreur d'affichage peut être causée soit par l'altération du système de supervision, notamment en cas de bouclage d'un programme et monopolisation de l'unité centrale par celui-ci, soit par des défaillances au niveau des mémoires servant au stockage des données d'image définissant les synoptiques, soit encore par un dysfonctionnement de l'écran d'affichage, cette liste de causes d'erreur n'étant pas exhaustive.

A cet effet, l'invention a pour objet une méthode pour sécuriser l'affichage, sur un écran d'une station de travail, de synoptiques reflétant l'état d'un système connecté à la station de travail. Selon cette méthode, on maintient un premier compteur au sein du système et un second compteur au sein de la station de travail. Périodiquement, au sein du système, on incrémente le premier compteur, on calcule une première signature à partir du premier compteur et de données d'image élaborées par le système pour une période courante et définissant un synoptique reflétant l'état courant du système, on transmet à la station de travail lesdites données d'image, ledit premier compteur et ladite première signature. Au sein de la station de travail, en réponse à la transmission de données, on stocke en mémoire les données d'image, le premier compteur et la première signature et on affiche sur l'écran un synoptique défini par lesdites données d'image stockées dans la mémoire. On incrémente le second compteur, on calcule une seconde signature à partir des données d'image stockées dans la mémoire et du second compteur. On calcule enfin une valeur de test à partir de la seconde signature, de la première signature et du premier compteur stockés dans la mémoire, cette valeur de test servant de base à la détection d'une erreur d'affichage.

Ainsi, à partir de la valeur de test, il est possible de détecter soit l'absence de transmission de données d'image de la part du système sous surveillance, c'est-à-dire une erreur de rafraîchissement de l'image affichée à l'écran, soit encore une erreur affectant les données d'image présentes en mémoire dans la station de travail.

Selon l'invention, la valeur de test est inscrite dans la mémoire à la place du premier compteur de telle manière à apparaître en clair par incrustation dans l'image affichée sur l'écran de sorte qu'une erreur d'affichage peut être détectée par l'opérateur par simple contrôle visuel.

En variante, la valeur de test est transmise à un organe extérieur à la station de travail qui est apte à détecter automatiquement l'absence de réception de cette valeur de test pour une période considérée ou l'irrégularité de son incrémentation au cours des périodes successives. Dans ce cas, l'erreur d'affichage peut être signalée par un organe sonore par exemple.

La figure 1 montre schématiquement l'architecture d'une station de travail destinée à afficher des synoptiques reflétant les différents états d'un réseau ferroviaire.

La figure 2 illustre schématiquement la méthode pour sécuriser l'affichage des synoptiques sur l'écran de la station de travail montrée à la figure 1.

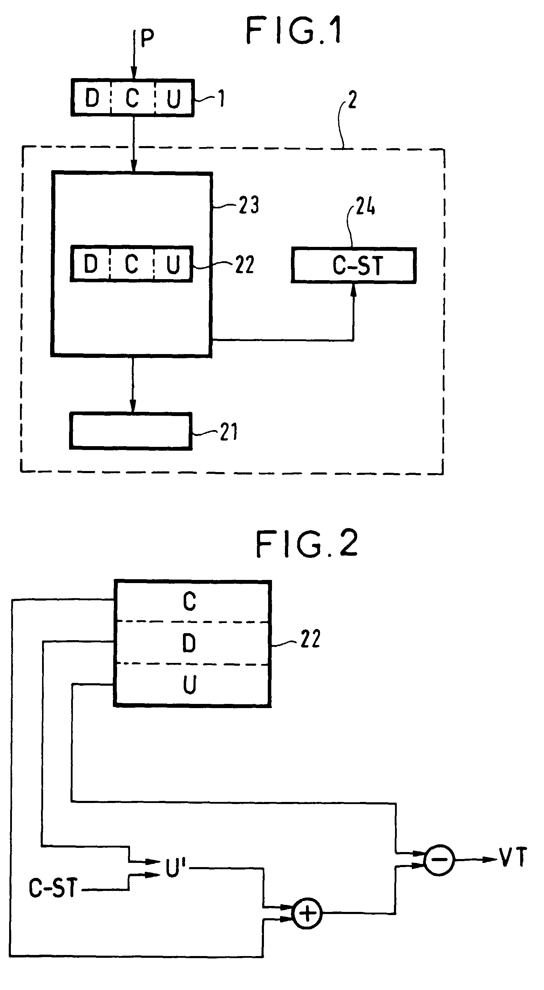

Figure 1, un système de supervision 1, faisant partie d'un système d'enclenchements ferroviaires plus complexe, reçoit des informations P qui sont remontées depuis des équipements de voie du réseau ferroviaire. Le système de supervision peut être vu ici comme un calculateur.

Les informations P sont par exemple des sorties de capteurs qui indiquent des changements intervenus à un instant donné sur le réseau ferroviaire. Les informations P peuvent ainsi signaler la présence d'un train sur une section de voie, la position d'un feu sur une voie, une position d'aiguillage, etc....

Le système de supervision 1 traite les informations P pour constituer des données d'image D qui définissent par exemple un synoptique qui reflète l'état courant du réseau ferroviaire.

On comprend donc qu'au cours du temps, l'état du réseau ferroviaire change ce qui se traduit par des mises à jour plus ou moins fréquentes des données d'image maintenues en mémoire interne par le système de supervision 1.

Le système de supervision 1 est relié à une station de travail 2, comme une machine "SUN", dont l'écran 21 sert de support pour l'affichage des synoptiques reflétant les états successifs du réseau ferroviaire.

La station de travail est équipée d'une mémoire vidéo 22 fonctionnant avec l'écran 21 sous la commande d'un gestionnaire d'affichage 23 du type "XWindows".

Selon l'invention, le système de supervision 1 maintient en mémoire interne, un premier compteur C qu'il incrémente périodiquement, la période considérée étant P. Il élabore au fur et à mesure des changements qui interviennent sur le réseau ferroviaire, des données d'image D mais calcule à chaque période P, une première signature U à partir des données d'image D courantes et du premier compteur C. Cette première signature peut par exemple être du type "somme de bits". A chaque période P considérée, le système de supervision 1 transmet à la station de travail 2 non seulement les données d'image D courantes mais en plus le premier compteur C et la première signature U. Autant dire que le système de supervision transmet périodiquement à la station de travail des données d'image estampillées par un compteur et une signature fonction du compteur et des données d'image. A noter que la période P est normalement plus petite que la pseudo-période de mise à jour des données d'image D.

Les données d'image estampillées reçues périodiquement par la station de travail 2 sont stockées temporairement dans la mémoire vidéo 22 ce qui provoque l'affichage sur l'écran 21 d'un synoptique à partir des données d'image D stockées dans la mémoire 22, ce synoptique reflétant normalement l'état courant du réseau ferroviaire à la période P considérée. Dans le cas d'exemple, la mémoire vidéo sert aussi au stockage temporaire du premier compteur C et de la première signature U.

Par ailleurs, il est prévu selon l'invention, que chaque opération d'affichage d'un synoptique à l'écran 21 comme indiqué ci-dessus est suivie d'un traitement de contrôle réalisé dans la station de travail par un programme spécifique indiqué par 24. En particulier, selon ce traitement de contrôle, un second compteur C-ST est maintenu au sein de la station de travail. Ce second compteur est incrémenté à chaque fois qu'un synoptique est affiché à l'écran 21. Suite à quoi, une seconde signature U' est calculée à partir des données d'image D stockées dans la mémoire 22 et du second compteur C-ST comme montré figure 2. Ensuite une valeur de test VT est calculée en ajoutant à la seconde signature U', la valeur du premier compteur C stocké dans la mémoire 22 et en y retranchant la valeur de la première signature U stockée dans la mémoire 22. A noter que la librairie du gestionnaire d'affichage "XWindows" offre une fonction comme 'GetImage" qui permet une lecture directe en mémoire vidéo pour l'obtention des données d'image, du premier compteur et de la première signature. Il faut comprendre qu'à l'initialisation du système de supervision, les compteurs C et C-ST ont la même valeur et sauf erreur de fonctionnement progressent en parallèle.

Avantageusement, la valeur de test VT est stockée dans la mémoire 22 à la place du premier compteur C de telle manière à apparaître en clair par incrustation dans l'image affichée sur l'écran 21. En cas de fonctionnement normal, cette valeur de test VT suit la même progression que le premier compteur C. Sinon, l'irrégularité de sa progression est facilement détectable par l'opérateur par simple contrôle visuel. Pour détecter le cas échéant, un dysfonctionnement de l'affichage entre l'instant de lecture des données d'image dans la mémoire vidéo et l'instant ou un synoptique est affiché à l'écran, on peut faire appel à une technique de redondance d'information. En particulier, si les données d'image D, maintenues dans la mémoire vidéo sont structurées sous la forme d'objets d'un programme à objets, il est possible de dupliquer l'opération d'affichage pour chaque objet d'image.

En variante, la valeur de test VT est transmise à un organe (non représenté) extérieur à la station de travail 2 qui est agencé pour détecter l'absence de réception de cette valeur de test VT à une période P considérée ou l'irrégularité de la progression de cette valeur au cours des périodes successives. En cas de détection d'une anomalie, l'organe déclenche une alarme sonore pour signaler à l'opérateur une erreur d'affichage.

Le traitement de contrôle réalisé par le programme 24 induit bien entendu une augmentation de la charge de traitement de la station de travail, notamment si la période P est très courte. Dans ce cas, il peut être avantageux de pouvoir débrayer le programme 24. Dans le cadre de l'application à un système d'enclenchements ferroviaires, une période P de rafraîchissement de la mémoire 22 raisonnable est de l'ordre de 30 secondes.

Le méthode selon l'invention permet de s'affranchir d'une duplication de l'écran d'affichage ce qui est particulièrement économique. La fonction de codage donnant les première et seconde signatures peut être adaptée en fonction des contraintes de fiabilité et de performance imposées par l'application considérée. Dans le cas d'exemple décrit ci-dessus, le système 1 apparaît séparé de la station de travail 2 constituée d'un calculateur avec écran graphique et mémoire vidéo. Il est entendu que l'invention s'applique aussi au cas où le calculateur de la station de travail fait partie du système 1. Dans ce cas, les compteurs C et C-ST et les signatures U et U' sont gérés par le même calculateur.

## Revendications

1. Une méthode pour sécuriser l'affichage, sur un écran (21) d'une station de travail (2), de synoptiques reflétant l'état d'un système (1) connecté à la station de travail, comprenant:
- le maintien d'un premier compteur (C) au sein du système et le maintien d'un second compteur (C-ST) au sein de la station de travail;
- périodiquement, au sein du système, l'incrémentation du premier compteur (C), le calcul d'une première signature (U) à partir du premier compteur et de données d'image (D) élaborées par le système pour une période courante et définissant un synoptique reflétant l'état courant du système, la transmission à la station de travail desdites données d'image (D), dudit premier compteur (C) et de ladite première signature (U);
- au sein de la station de travail (2), en réponse à la transmission de données, le stockage en mémoire (22) des données d'image (D), du premier compteur (C) et de la première signature (U), l'affichage sur l'écran d'un synoptique à partir desdites données d'image (D) stockées en mémoire, l'incrémentation du second compteur (C-ST), le calcul d'une seconde signature (U') partir desdites données d'image (D) stockées dans la mémoire et du second compteur (C-ST), le calcul d'une valeur de test (VT) à partir de la seconde signature (U'), de la première signature (U) et du premier compteur (C) stockés dans la mémoire, cette valeur de test servant de base à la détection d'une erreur d'affichage.

2. La méthode selon la revendication 1, dans laquelle la valeur de test (VT) est inscrite dans la mémoire (22) à la place du premier compteur (C) de telle manière à apparaître en clair par incrustation dans l'image affichée sur l'écran (21).

3. La méthode selon la revendication 1, dans laquelle la valeur de test (VT) est transmise à un organe extérieur à la station de travail qui est apte à détecter automatiquement l'absence de réception de cette valeur de test pour une période considérée ou l'irrégularité de son incrémentation au cours des périodes successives.
